# EUROPÄISCHE PATENTSCHRIFT

(11) **EP 1 530 553 B1**
(45) Veröffentlichungstag und Bekanntmachung des Hinweises auf die Patenterteilung: **18.01.2006**
(21) Anmeldenummer: 03797207.2
(22) Anmeldetag: 23.07.2003
(51) Int. Cl.: C04B 28/26, C04B 38/08, C09D 5/18, B60R 13/08, C04B 111/28, C04B 111/52

(54) **ISOLIERBAUTEIL ZUR W RME- UND/ODER SCHALLISOLIERUNG MIT FEUE RHEMMENDER BESCHICHTUNG**
INSULATING COMPONENT FOR INSULATING HEAT AND/OR SOUND, PROVIDED WITH A FIRE-RETARDANT COATING
ELEMENT D'ISOLATION POUR UNE ISOLATION THERMIQUE ET/OU ACOUSTIQUE A REVETEMENT IGNIFUGE

(30) Priorität: 23.08.2002 DE 10239631
(43) Veröffentlichungstag der Anmeldung: 18.05.2005
(73) Patentinhaber: Carcoustics Tech Center GmbH, 51381 Leverkusen (DE)
(72) Erfinder: CZERNY, Hans, Rudolf, 53913 Swisstal (DE)
(74) Vertreter: Meyer, Hans-Joachim
(86) Internationale Anmeldenummer: PCT/EP2003/008030
(87) Internationale Veröffentlichungsnummer: WO 2004/026788

(56) Entgegenhaltungen:
- EP-A- 0 559 254
- EP-A- 0 816 443
- EP-A- 0 931 778
- WO-A-00/55244
- WO-A-99/48837
- DE-A- 3 643 634
- US-A- 4 719 244
- CHEMICAL ABSTRACTS, Bd. 94, Nr. 8, 23. Februar 1981 (1981-02-23), Columbus, Ohio, US; abstract no.: 51901t, Seite 297 XP0000063849 & JP 55 090307 A (T. ISHIKAWA) 8. Juli 1980 (1980-07-08)

## Beschreibung

Die Erfindung betrifft ein Isolierbauteil zur Wärme-und/oder Schallisolierung, insbesondere für Kraftfahrzeuge, das zumindest partiell mit einer feuerhemmenden Beschichtung versehen ist.

Es ist bekannt, aus Schaumstoff hergestellte Schall- und Wärmedämmelemente für Kraftfahrzeuge,mit Flammschutzmitteln auszurüsten, um insbesondere bei einem Unfall des Kraftfahrzeugs mit Brandfolge eine unnötige Brandausbreitung zu verhindern. So ist beispielsweise in der DE 199 18 269 A1 eine schalldämmende Stirnwandverkleidung zur Anordnung zwischen dem Motorraum und dem Fahrgastraum eines Kraftfahrzeugs beschrieben, die eine dem Motorraum zugewandte poröse Schicht aus Filz oder Polyurethanschaum aufweist, wobei vorgeschlagen wird, auf die poröse Schicht eine flammhemmende Schicht, insbesondere einen Flammhemmer mit einem Copolymer aus Vinylindenfluorid und Hexafluorpropen aufzubringen, um einen Feuerschutz gegenüber dem Motorraum zu bilden.

Aus der DE 199 05 226 A1 ist ein Schall- und Wärmedämmmittel zur Isolierung von Gebäuden, Fahrzeugen, Leitungen und dergleichen bekannt, die aus einer Kernschicht aus Fasern oder ähnlichen Stoffen besteht, welche mit einem feuerhemmenden Zusatz versehen sind, wobei die Kernschicht an mindestens einer Außenfläche mit einem nicht oder schwer entzündbaren, bei einer vorgegebenen Temperatur aufschäumenden reaktivierbaren Material beschichtet ist. Bei dem feuerhemmenden Zusatz handelt es sich um Stickstoff bzw. Borax. Hinsichtlich der Zusammensetzung des schwer entzündbaren, aufschäumbaren Materials enthält die DE 199 05 226 A1 keine näheren Angaben.

Die DE 197 25 761 A1 beschreibt ein Verfahren zur Herstellung einer feuerhemmenden Brandschutz-Beschichtungsmasse für metallische und mineralische Untergründe. Die Beschichtungsmasse besteht im wesentlichen aus einer Wasserglas-Lösung, einem Thixotropiemittel (z.B. Bentonit), Glimmer; Magnesiumsilicat, Kaolin, Wollastonit, Wasser, feinporigem Rundgranulat aus Glas und/oder Hohlglaskugeln, wobei das Rundgranulat sowie die Hohlglaskugeln eine Korngröße von 0,2 bis 4,0 mm aufweisen.

Ferner ist aus der DE 199 22 247 A1 eine Beschichtungszusammensetzung für Brandschutz- und Schallschutzzwecke bekannt, die im wesentlichen 25 bis 60 Gew.-% eines leichten Aggregats (Zuschlagstoffes), 20 bis 60 Gew.-% Bindemittel, weniger als 50 Gew.-% Absorptionsmittel, 5 bis 30 Gew.-% Expandiermittel und 2 bis 20 Gew.-% einer carbonisierten akustischen Faser, sowie die selektive Verwendung eines oder mehrerer Tenside, Verdickungsmittel, Mittel zur Erhöhung der Festigkeit, Verzögerungsmittel und antibakterieller Mittel umfasst.

Aus der EP 0 816 443 A2 ist eine unter Wärmeeinwirkung aufschäumende, feuerhemmende Beschichtung bekannt, die aus 40 bis 85 Gew.-% Silikatlösung, 5 bis 40 Gew.-% Fritte-Material, d.h. glasartigem, körnigem Pulver und 1 bis 15 Gew.-% eines unter Wärmeeinwirkung expandierenden Treibmittels zusammensetzt ist. Die Beschichtung kann zudem weitere Bestandteile wie Füllstoffe, Entschäumer, Weichmacher, Verdickungsmittel, Pigmente und Viskositätsstabilisatoren enthalten.

Die EP 0 931 778 A1 offenbart einen Feuerfestformkörper, der insbesondere für Brennkammerböden von Heizkesseln bestimmt ist und aus einem mit hochtemperaturbeständigem Bindemittel verpressten Korpus aus Vermiculite-Partikeln besteht. Die Vermiculite-Partikel sind in der Größenordnung von 20 bis 30 Gew.-% im Gesamtkorpus zusammen mit keramischen Hohlkügelchen als sogenannte Extendosheres in der Größenordnung von 40 bis 50 Gew.-% enthalten, wobei der Rest aus dem hochtemperaturbeständigem Bindemittel, z.B. einem Kaliwasserglasbinder besteht. Alle drei Komponenten liegen in homogener Verteilung im Korpus vor.

Der vorliegenden Erfindung liegt die Aufgabe zugrunde, ein Isolierbauteil der eingangs genannten Art zu schaffen, das bei guter akustischer Isolierwirkung zugleich eine hohe Feuerfestigkeit aufweist und trotz seiner feuerhemmenden Beschichtung ausreichend flexibel für die Montage in Kraftfahrzeugen ist.

Diese Aufgabe wird erfindungsgemäß durch das Isolierbauteil mit den Merkmalen des Anspruchs 1 gelöst. Bevorzugte und vorteilhafte Ausgestaltungen der Erfindung sind in den Unteransprüchen angegeben.

Das erfindungsgemäße Isolierbauteil zeichnet sich durch eine besonders hohe thermische Beständigkeit mit hoher thermischer sowie akustischer Isolierwirkung aus. Diese Eigenschaften lassen sich bei relativ günstigen Herstellungskosten realisieren. Der thermoplastische Pulverkleber bewirkt neben der Verklebefähigkeit bei thermischer Behandlung auch eine Flexibilisierung der feuerhemmenden Beschichtung.

Nach einer vorteilhaften Ausgestaltung kann die feuerhemmende Beschichtung des erfindungsgemäßen Isolierbauteils als weitere Komponenten 0,1 bis 5 Gew-% Aluminium-Pulver mit einer Korngröße ≤ 50 µm und/oder 0,1 bis 20 Gew.-% Aluminium-Hydroxid aufweisen. Die feuerhemmende Beschichtung erhält durch die Aluminisierung ein günstiges Reflexionsvermögen. Ein hoher Anteil von auf die Beschichtungsoberfläche auftreffender Wärmestrahlung wird somit reflektiert, wodurch die Wärmebelastung des Isolierbauteils entsprechend verringert wird. Aluminium-Hydroxid besitzt eine Feuerlöschfunktion, so dass dessen Zugabe als Additiv ebenfalls vorteilhaft ist.

Eine besonders hohe Feuerbeständigkeit lässt sich erzielen, wenn als keramischer Klebstoff in der feuerhemmenden Beschichtung ein feuerfester keramischer Klebstoff auf Basis einer Wasserglas-Lösung eingesetzt wird, der vorzugsweise eine Temperaturbeständigkeit von über 1000°C besitzt.

Die als Füllstoff eingesetzten keramischen Mikrohohlkugeln bewirken eine erhebliche Reduzierung der Dichte und damit des Gewichts der feuerhemmenden Beschichtung. Zudem verbessern die keramischen Mikrohohlkugeln durch ihre Gaseinschlüsse sowohl die thermische als auch die akustische Isolierwirkung des erfindungsgemäß Isolierbauteils. Die keramischen Mikrohohlkugeln verringern außerdem den Bedarf an keramischem Klebstoff, verbessern die mechanischen Eigenschaften des Isolierbauteils, beispielsweise die Abriebfestigkeit, sind nicht brennbar, chemisch inert und besitzen eine hohe Temperaturbeständigkeit. Die keramischen Mikrohohlkugeln können vorzugsweise aus 55 bis 68 Gew.-% SiO₂, 25 bis 36 Gew.-% Al₂O₃ und 0 bis 6 Gew.-% Fe₂O₃ bestehen. Derartige Mikrohohlkugeln haben eine Temperaturbeständigkeit von über 1000°C; sie können insbesondere bis 1200°C temperaturbeständig sein.

Das in der feuerhemmenden Beschichtung des Isolierbauteils eingesetzte Treibmittel ist aus hohlen Polymerkunststoffpartikeln gebildet, die eine gasdichte, in Wasser unlösliche Hülle aufweisen, in der flüssiger und/oder gasförmiger Kohlenwasserstoff eingekapselt ist. Die Polymerkunststoffpartikel weisen vorzugsweise eine Korngröße im Bereich von 2 bis 50 µm auf. Der Polymerkunststoff der gasdichten Hülle und der darin eingekapselte Kohlenwasserstoff sind vorzugsweise so gewählt, dass die hohlen Polymerkunststoffpartikel unter Wärmeeinwirkung ab einer Temperatur von über 100°C zu expandieren beginnen und ab einer Temperatur von über 130°C platzen, wobei der eingekapselte Kohlenwasserstoff als Treibgas freigesetzt wird.

Nachfolgend wird die Erfindung anhand einer mehrere Ausführungsbeispiele darstellenden Zeichnung weiter erläutert. Es zeigen:
- Fig. 1: eine schematische Schnittdarstellung eines Abschnitts eines erfindungsgemäßen Isolierbauteils gemäß einem ersten Ausführungsbeispiel und
- Fig. 2: eine schematische Schnittdarstellung eines Abschnitts eines erfindungsgemäßen Isolierbauteils gemäß einem zweiten Ausführurigsbeispiel.

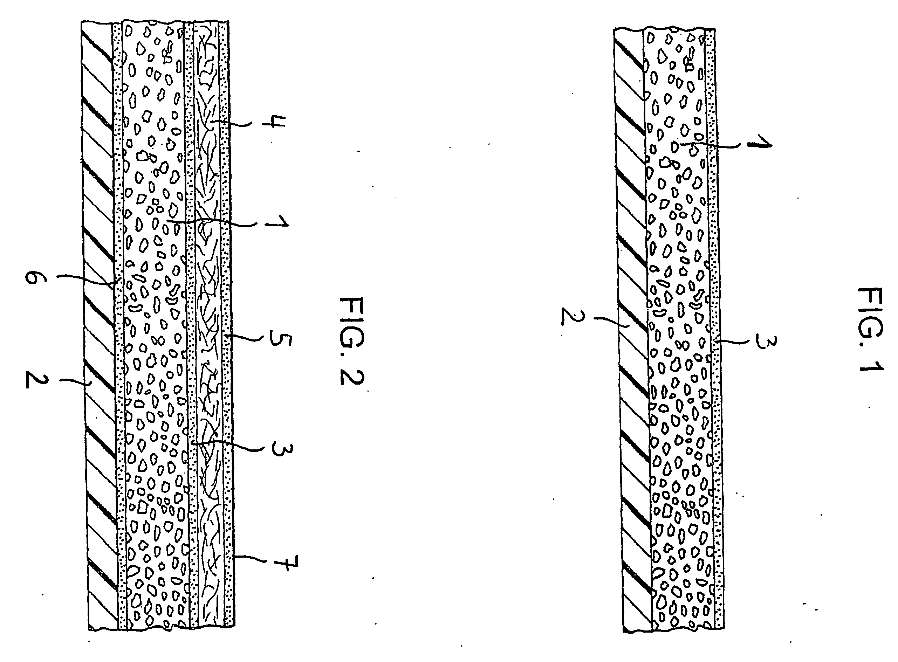

Fig. 1 zeigt einen Abschnitt eines Isolierbauteils zur Wärme- und Schallisolierung in einem Kraftfahrzeug. Das Isolierbauteil ist in diesem Ausführungsbeispiel aus einer Schaumstofflage 1 und einer Schwerschicht 2 aufgebaut. Die Schaumstofflage 1 und die Schwerschicht 2 bilden ein akustisches Feder-Masse-System. Die Schwerschicht 2 kann an der Rückseite der Schaumstofflage 1 beispielsweise durch Hinterspritzen appliziert sein. Die Schaumstofflage 1 besteht vorzugsweise aus offenporigem Melaminharzschaum. Die Schwerschicht 2 kann beispielsweise aus thermoplastischem Material bestehen, das Zusatzstoffe enthält und dichter ist, als die poröse Schaumstofflage 1. Die Schwerschicht 2 kann insbesondere aus einem Kunstharz bestehen, dass einen hohen Anteil anorganischer Füllstoffe mit hohem Molekulargewicht aufweist, oder aus einem Gemisch von Polyolefinen oder polymerem EPDM.

Die Schaumstofflage 1 ist mit einer feuerhemmenden Beschichtung 3 versehen, die ein expansionsfähiges, keramisches Klebesystem darstellt. Bei Beflammung oder entsprechender Wärmeeinwirkung expandiert die feuerhemmende Beschichtung 3 und verhindert die Ausbreitung von Brandherden bzw. Temperaturdurchdringungen. In der feuerhemmenden Schicht 3 können zur Erhöhung ihrer mechanischen Festigkeit Glas- und/oder Gesteinsfasern, beispielsweise in Form eines netzartigen Glasfasergeleges eingebettet sein.

Das in Fig. 2 dargestellte Ausführungsbeispiel unterscheidet sich von dem Ausführungsbeispiel gemäß Fig. 1 zunächst dadurch, dass oberhalb der Schaumstofflage 1 eine weitere Lage 4 aus Vliesstoff angeordnet ist. Der Vliesstoff kann beispielsweise aus Glasfasern und/oder Mineralfasern bestehen. Die Vliesstofflage 4 ist zur Außenseite hin mit einer feuerhemmenden Beschichtung 5 versehen, die derjenigen des in Fig. 1 dargestellten Isolierbauteils im Wesentlichen entspricht. Ein weiterer Unterschied des Ausführungsbeispiels gemäß Fig. 2 besteht darin, dass die Schwerschicht 2, die Srhaumstofflage 1 und die Vliesstofflage 4 durch Zwischenschichten 5, 6 des feuerhemmenden Beschichtungsmaterials miteinander verklebt sind.

Das Isolierbauteil kann an seiner Außenseite ferner mit einer Aluminiumfolie 7 versehen sein, wobei die Aluminiumfolie 7 freiliegend angeordnet und durch die feuerhemmende Beschichtung 5 mit der darunter liegenden Lage 4 aus Vliesstoff oder beispielsweise Schaumstoff verklebt ist.

Im folgenden werden nun Beispiele für Zusammensetzungen der feuerhemmenden Beschichtung 3, 5 bzw. 6 angegeben:

### Beispiel 1

- 40 bis 90 Gew.-%: keramischer Klebstoff
- 5 bis 50 Gew.-%: keramischer Mikrohohlkugeln mit einer Korngröße, im Bereich von 0,1 bis 3 mm
- 0,1 bis 10 Gew.-%: unter Wärmeeinwirkung expandierbares Treibmittel

### Beispiel 2

- 40 bis 90 Gew.-%: keramischer Klebstoff
- 5 bis 50 Gew.-%: keramischer Mikrohohlkugeln mit einer Korngröße im Bereich von 0,1 bis 3 mm
- 0,1 bis 10 Gew.-%: unter Wärmeeinwirkung expandierbares Treibmittel
- 0,1 bis 5 Gew.-%: Aluminium-Feinpulver mit einer Korngröße ≤ 50 µm
- 0,1 bis 20 Gew.-%: Aluminium-Hydroxid (Al₂O₃ x H₂O)

### Beispiel 3

- 40 bis 90 Gew.-%: keramischer Klebstoff
- 5 bis 50 Gew.-%: keramischer Mikrohohlkugeln mit einer Korngröße im Bereich von 0,1 bis 3 mm
- 0,1 bis 10 Gew.-%: unter Wärmeeinwirkung expandierbares Treibmittel
- 5 bis 30 Gew.-%: thermoplastisches Feinpulver

Der keramische Klebstoff ist einer feuerfester Klebstoff auf Basis von Wasserglas-Lösungen (Suspensionen). Er bildet die Basismatrix der feuerhemmenden Beschichtung 3, 5 bzw. 6 und besitzt eine Temperaturbeständigkeit von über 1000°C, beispielsweise von 1050°C.

Der keramische Klebstoff hat typischerweise folgende chemische Zusammensetzung:
- 34 bis 35 Gew.-%: SiO₂
- 0,01 bis 0,04 Gew.-%: MgO
- 6 bis 7 Gew.-%: Na₂O
- 8 bis 9 Gew.-%: Al₂O₃
- 0,01 bis 0,04 Gew.-%: CaO
- 48 bis 51 Gew.-%: H₂O
- 0,1 bis 0, 4 Gew.-%: Fe₂O₃
- 0,1 bis 0,4 Gew. -%: K₂O

Die keramischen Mikrohohlkugeln stellen einen Leichtgewichtsfüllstoff dar. Sie verringern den Bedarf an keramischem Klebstoff, sind unbrennbar, chemisch inert und bis zu einem Temperaturbereich von etwa 1100 bis 1200°C temperaturbeständig. Sie reduzieren die Dichte der feuerhemmenden Beschichtung 3, 5, 6 und erhöhen deren thermische und akustische Isolationswirkung. Sie haben eine Wärmeleitzahl von etwa. 0, 09 Wm⁻¹k⁻¹. Ihr Schüttgewicht liegt im Bereich von 200 bis 600 g/l. Darüber hinaus verbessern sie die mechanischen Eigenschaften des Isolierbauteils, insbesondere dessen Abriebfestigkeit sowie dessen Form- und Dimensionsstabilität.

Das in der feuerhemmenden Beschichtung 3, 5, 6 enthaltene Treibmittel besteht aus kleinen Kunststoffhohlpartikeln, die eine gasdichte, in Wasser unlösliche Hülle aus einem Mischpolymer aufweisen, in der flüssiger und/oder gasförmiger Kohlenwasserstoff eingekapselt ist. Die Kunststoffhohlpartikel weisen einen Korndurchmesser im Bereich von etwa 2 bis 50 *µ*m, vorzugsweise im Bereich von etwa 10 bis 20 *µ*m. Wenn die Kunststoffhohlpartikel durch Wärme- bzw. Feuereinwirkung erhitzt werden, geht der flüssige Kohlenwasserstoff in die Gasphase über. Der Druck des gasförmigen Kohlenwasserstoffs nimmt mit wachsender Temperatur zu. Gleichzeitig erweicht die gasdichte Hülle, so dass das Volumen der Kunststoffhohlpartikel um ein Vielfaches zunimmt. Die Volumenzunahme kann beispielsweise das 30- bis 50-fache des ursprünglichen Volumens betragen. Das Material der gasdichten Hülle und der darin eingeschlossene Kohlenwasserstoff sind so gewählt, dass die Volumenzunahme (Expansion) bei Wärmeeinwirkung ab einem bestimmten Temperaturbereich ausgelöst wird. Die Auslösetemperatur liegt vorzugsweise bei einer Temperatur von über 100°C.

In einem bestimmten Temperaturbereich ist die Hülle so weich, dass sie bei weiterer Temperaturerhöhung schließlich platzt und den eingekapselten Kohlenwasserstoff als Treibgas freigibt. Der Temperaturbereich, in welchem das Treibgas freigesetzt wird, liegt oberhalb von etwa 130°C.

Das in der feuerhemmenden Beschichtung 3, 5, 6 optional enthaltene Aluminium-Pulver bewirkt eine Wärmestrahlungsreflexion an der freiliegenden Beschichtungsoberfläche. Außerdem kann es zur optischen Abgrenzung der feuerhemmenden Beschichtung 3, 5, 6 dienen, indem es sie deutlich sichtbar macht. Das eingesetzte Aluminium-Pulver hat eine Korngröße von ≤ 50 µm, vorzugsweise ≤ 20 µm.

Das Aluminium-Pulver kann Aluminium-Hydroxid (Al₂O₃ x H₂O) als Additiv enthalten. Aluminium-Hydroxid wirkt feuerlöschend.

Des weiteren kann die feuerhemmende Beschichtung 3, 5, 6 einen durch Wärme aktivierbaren Thermoplastkleber in Form von thermoplastischem Feinpulver enthalten. Der Thermoplastkleber kann beispielsweise aus CO-Polyethylenterephthalat (CO-PET), Copolyamid (CO-PA) und/oder TPO bestehen. Der Thermoplastkleber sorgt für eine Flexibilisierung der feuerhemmenden Beschichtung 3, 5, 6 und eine Verklebefähigkeit der Beschichtung 3, 5, 6 bei thermischer Behandlung. Auf diese Weise lässt sich die feuerhemmenden Beschichtung 3, 5, 6 insbesondere mit Schaumstoffschichten und Textilmaterialien gut verbinden.

Die aus den vorgenannten Komponenten gebildete Zusammensetzung kann als wässrige Suspension durch Sprühen, Rakeln, Rollen oder Streichen auf die jeweilige Lage des Isolierbauteils aufgetragen werden. Die so erzeugte keramische, feuerhemmende Beschichtung besitzt hervorragende Klebeeigenschaften und eine ausgezeichnete Barrierewirkung gegen thermische Belastung und direkte Beflammung. Sie ist flexibel, lässt sich gut verarbeiten und preiswert herstellen.

Ein so ausgerüstetes Isolierbauteil kann insbesondere als akustische Stirnwandisolierung sowie als akustisch Wirksames Hitzeschutzschild in Kraftfahrzeugen eingesetzt werden.

## Patentansprüche

1. Isolierbauteil zur Wärme- und/oder Schallisolierung, insbesondere für Kraftfahrzeuge, das zumindest partiell mit einer feuerhemmenden Beschichtung (3, 5, 6) versehen ist,
**dadurch gekennzeichnet, dass**
die feuerhemmende Beschichtung (3, 5, 6) mindestens aus folgenden Komponenten zusammengesetzt ist:
40 bis 90 Gew.-% eines keramischen Klebstoffs,
5 bis 50 Gew.-% keramische Mikrohohlkugeln mit einer Korngröße im Bereich von 0,1 und 3 mm,
5 bis 30 Gew.-% thermoplastischen Pulverkleber, und
0,1 bis 10 Gew.-% eines unter Wärmeeinwirkung expandierenden Treibmittels, das aus hohlen Polymerkunststoffpartikeln gebildet ist, die eine gasdichte, in Wasser unlösliche Hülle aufweisen, in der flüssiger und/oder gasförmiger Kohlenwasserstoff eingekapselt ist, wobei der thermoplastische Pulverkleber aus CO-Polyethylenterephthalat (CO-PET), Copolyamid (CO-PA) und/oder thermoplastischem Elastomer auf Basis von Olefinen (TPO) gebildet ist.

2. Isolierbauteil nach Anspruch 1,
**dadurch gekennzeichnet, dass**
die feuerhemmende Beschichtung (3, 5, 6) als weitere Komponenten
0,1 bis 5 Gew.-% Aluminium-Pulver mit einer Korngröße kleiner oder gleich 50 µm und/oder
0,1 bis 20 Gew.-% Aluminium-Hydroxid aufweist.

3. Isolierbauteil nach Anspruch 1 oder 2,
**dadurch gekennzeichnet, dass**
der keramische Klebstoff ein feuerfester keramischer Klebstoff auf Basis einer Wasserglas-Lösung ist.

4. Isolierbauteil nach einem der Ansprüche 1 bis 3,
**dadurch gekennzeichnet, dass**
der keramische Klebstoff eine Temperaturbeständigkeit von über 1000°C besitzt.

5. Isolierbauteil nach einem der Ansprüche 1 bis 4,
**dadurch gekennzeichnet, dass**
die keramischen Mikrohohlkugeln folgende Zusammensetzung aufweisen:
55 bis 68 Gew. -% SiO₂,
25 bis 36 Gew.-% Al₂O₃ und
0 bis 6 Gew.-% Fe₂O₃.

6. Isolierbauteil nach einem der Ansprüche 1 bis 5,
**dadurch gekennzeichnet, dass**
die keramischen Mikrohohlkugeln eine Temperaturbeständigkeit von über 1000°C besitzen.

7. Isolierbauteil nach einem der Ansprüche 1 bis 6,
**dadurch gekennzeichnet, dass**
die hohlen Polymerkunststoffpartikel unter Wärmeeinwirkung ab einer Temperatur von über 100°C expandieren.

8. Isolierbauteil nach einem der Ansprüche 1 bis 7,
**dadurch gekennzeichnet, dass**
die hohlen Polytilerkunststoffpartikel unter Wärmeeinwirkung mit einer Temperatur von über 130°C platzen, wobei der flüssige und/oder gasförmige Kohlenwasserstoff als Treibgas freigesetzt wird.

9. Isolierbauteil nach einem der Ansprüche 1 bis 8,
**dadurch gekennzeichnet, dass**
die hohlen Polymerkunststoffpartikel eine Korngröße im Bereich von 2 bis 50 *µ*m aufweisen.

10. Isolierbauteil nach einem der Ansprüche 1 bis 9,
**dadurch gekennzeichnet, dass**
das Isolierbauteil aus mehreren Lagen (1, 2, 4) Vliesstoff, Schaumstoff und/oder Schwerschichtmaterial gebildet ist, wobei mindestens zwei der Lagen (1, 2, 4) durch die feuerhemmende Beschichtung (3, 5, 6) miteinander verklebt sind.

11. Isolierbauteil nach einem der Ansprüche 1 bis 10,
**dadurch gekennzeichnet, dass**
das Isolierbauteil außenseitig mit der feuerhemmenden Beschichtung (5) und einer Aluminiumfolie (7) versehen ist, wobei die Aluminiumfolie (7) freiliegend angeordnet und durch die feuerhemmende Beschichtung (5) mit einer weiteren Lage (4) des Isolierbauteils verklebt ist.

## Claims

1. An insulation component for thermal and/or sound insulation, particularly for motor vehicles, which is at least partially provided with a fire-retardant coating (3, 5, 6),
**characterized in that** the fire-retardant coating (3, 5, 6) is composed of at least the following components:
40 to 90 wt. % of a ceramic adhesive,
5 to 50 wt. % ceramic micro hollow spheres having a grain size in the range from 0.1 to 3 mm,
5 to 30 wt. % thermoplastic powder adhesive, and
0.1 to 10 wt. % of a propellant which expands under the effect of heat, which is made of hollow polymer plastic particles, having a gas-tight covering that is insoluble in water, in which liquid and/or gaseous hydrocarbon is encapsulated, the thermoplastic powder adhesive being made of CO-polyethylene terephthalate (CO-PET), co-polyamide (CO-PA), and/or thermoplastic elastomer based on olefins (TPO).

2. The insulation component according to Claim 1, **characterized in that** the fire-retardant coating (3, 5, 6) contains, as further components,
0.1 to 5 wt. % aluminum powder having a grain size less than or equal to 50 µm, and/or
0.1 to 20 wt. % aluminum hydroxide.

3. The insulation component according to Claim 1 or 2, **characterized in that** the ceramic adhesive is a fireproof ceramic adhesive based on a water glass solution.

4. The insulation component according to any one of Claims 1 to 3,
**characterized in that** the ceramic adhesive has a temperature resistance of greater than 1000°C.

5. The insulation component according to any one of Claims 1 to 4,
**characterized in that** the ceramic micro hollow spheres have the following composition:
55 to 68 wt. % SiO₂,
25 to 36 wt. % Al₂O₃, and
0 to 6 wt. % Fe₂O₃.

6. The insulation component according to any one of Claims 1 to 5,
**characterized in that** the ceramic micro hollow spheres have temperature resistance of greater than 1000°C.

7. The insulation component according to any one of Claims 1 to 6,
**characterized in that** the hollow polymer plastic particles expand under the effect of heat from a temperature greater than 100°C.

8. The insulation component according to any one of Claims 1 to 7,
**characterized in that** the hollow polymer plastic particles burst under the effect of heat at a temperature greater than 130°C, the liquid and/or gaseous hydrocarbon being released as a propellant gas.

9. The insulation component according to any one of Claims 1 to 8,
**characterized in that** the hollow polymer plastic particles have a grain size in the range from 2 to 50 µm.

10. The insulation component according to any one of Claims 1 to 9,
**characterized in that** the insulation component is made of multiple layers (1, 2, 4) of nonwoven material, foam, and/or heavy layer material, at least two of the layers (1, 2, 4) being glued to one another by the fire-retardant coating (3, 5, 6).

11. The insulation component according to any one of Claims 1 to 10,
**characterized in that** the insulation component is provided on the outside with the fire-retardant coating (5) and an aluminum film (7), the aluminum film (7) being positioned exposed and being glued to a further layer (4) of the insulation component by the fire-retardant coating (5).

## Revendications

1. Elément d'isolation pour isolation thermique et/ou acoustique, notamment pour véhicules automobiles, qui est équipé au moins partiellement d'un revêtement ignifuge (3, 5, 6),
**caractérisé en ce que** le revêtement ignifuge (3, 5, 6) est composé au moins des composants suivants :
40 à 90 % en poids de colle céramique,
5 à 50 % en poids de billes céramiques creuses microscopiques ayant une granulométrie dans la plage de 0,1 à 3 mm,
5 à 30 % en poids de colle en poudre thermoplastique et
0,1 à 10 % en poids d'agent gonflant prenant de l'expansion sous l'effet de la chaleur, constitué de particules creuses de matière plastique à base de polymère qui comportent une enveloppe étanche au gaz et insoluble dans l'eau dans laquelle est encapsulé de l'hydrocarbure liquide et/ou gazeux, la colle en poudre thermoplastique étant composée de CO-téréphtalate de polyéthylène (CO-PET), de copolyamide (CO-PA) et/ou d'élastomère thermoplastique à base d'oléfines (TPO).

2. Elément d'isolation selon la revendication 1, **caractérisé en ce que** le revêtement ignifuge (3, 5, 6) comporte comme autres composants 0,1 à 5 % en poids de poudre d'aluminium d'une granulométrie inférieure ou égale à 50 *µ*m ou 0,1 à 20 % en poids d'hydroxyde d'aluminium.

3. Elément d'isolation selon la revendication 1 ou 2, **caractérisé en ce que** la colle céramique est une colle céramique résistant au feu à base d'une solution de verre soluble.

4. Elément d'isolation selon une des revendications 1 à 3,
**caractérisé en ce que** la colle céramique possède une résistance à la température supérieure à 1000 °C.

5. Elément d'isolation selon une des revendications 1 à 4,
**caractérisé en ce que** les billes céramiques creuses microscopiques ont la composition suivante :
55 à 68 % en poids de SiO₂,
25 à 36 % en poids d'Al₂O₃ et
0 à 6 % en poids de F₂O₃.

6. Elément d'isolation selon une des revendications 1 à 5,
**caractérisé en ce que** les billes céramiques creuses microscopiques ont une résistance à la température dépassant les 1000 °C.

7. Elément d'isolation selon une des revendications 1 à 6,
**caractérisé en ce que** les particules creuses en matière plastique à base de polymère prennent de l'expansion sous l'effet de la chaleur à partir d'une température supérieure à 100 °C.

8. Elément d'isolation selon une des revendications 1 à 7,
**caractérisé en ce que** les particules creuses en matière plastique à base de polymère éclatent sous l'effet de la chaleur à une température supérieure à 130 °C, tandis que l'hydrocarbure liquide et/ou gazeux est libéré sous forme de gaz propulseur.

9. Elément d'isolation selon une des revendications 1 à 8,
**caractérisé en ce que** les particules creuses en matière plastique à base de polymère ont une granulométrie dans la plage de 2 à 50 µm.

10. Elément d'isolation selon une des revendications 1 à 9,
**caractérisé en ce que** l'élément isolant est composé de plusieurs couches (1, 2, 4) de non-tissé, de mousse et/ou de matière d'une couche lourde, au moins deux des couches (1, 2, 4) étant collées ensemble par le revêtement ignifuge (3, 5, 6).

11. Elément d'isolation selon une des revendications 1 à 10,
**caractérisé en ce que** l'élément isolant est équipé sur sa face extérieure du revêtement ignifuge (5) et d'un film d'aluminium (7), le film d'aluminium (7) étant disposé dégagé et étant collé par le revêtement ignifuge (5) à une autre couche (4) de l'élément d'isolation.
